# EUROPEAN PATENT SPECIFICATION

(11) **EP 3 600 739 B1**
(45) Date of publication and mention of the grant of the patent: **30.11.2022**
(21) Application number: 18715987.6
(22) Date of filing: 19.03.2018
(51) Int. Cl.: B23B 51/04, B23B 51/08, B23B 51/10

(54) **MULTIFUNCTION TIP**
MULTIFUNKTIONSSPITZE
POINTE MULTI-FONCTION

(30) Priority: 21.03.2017 IT 201700030700
(43) Date of publication of application: 05.02.2020
(73) Proprietor: Walter Tosto S.p.A., 66100 Chieti Scalo (CH) (IT)
(72) Inventor: FEBBO, Dino, 66100 Chieti Scalo (CH) (IT)
(74) Representative: Tiburzi, Andrea
(86) International application number: PCT/IT2018/050043
(87) International publication number: WO 2018/173086

(56) References cited:
- EP-A1- 0 687 516
- EP-A2- 2 006 042
- WO-A1-95/07787
- DE-A1- 19 841 579
- JP-A- 2008 161 990
- US-A- 1 647 395
- US-A- 4 535 214
- US-A1- 2002 141 840

## Description

The present invention relates to a multi-function bit.

More specifically, the invention relates to a bit for carrying out various processes in the assembly of sheets for coupling tubes, in particular for carrying out operations in the welding of tube-plate joints.

In the following the description will be directed to the welding of perforated tube plates, on which bundles of tubes have to be welded, but it is clear that the same should not be considered limited to this specific use.

As is well known, currently in the industrial heat exchangers, tube bundles must be coupled to plates. Said tubes can have diameters of different sizes, although they typically have diameters between 6,35 mm and 25,4 mm. Moreover, said tubes can be made of different materials such as carbon steel, low alloy, stainless steel, duplex, copper-based alloys, nickel alloys as well as titanium, when maximum resistance to corrosion is required.

The tube-plate joint can have several different design geometries (backward tubes, flush-plate, protruding tubes, etc.) as well as welded behind the plate with special spears that weld from inside the tube (so-called "Internal Bore Welding" procedure).

For coupling a tube to a plate for the welding by using the above-mentioned technique of the Internal Bore Welding, in correspondence of a specific hole, it is generally necessary to carry out different operations, such as drilling and boring, milling by contouring, for the arrangement of the tube, and possibly further milling in the contour near the hole, for the possible following coupling to the plate of test equipment for checking the quality of the weld.

For each of said processing steps it is necessary to have a specific tool, which must be positioned with respect to the plate. The positioning of each tool must be very precise and this entails a considerable waste of time, necessarily affecting the processing efficiency. Prior art US 1647395 A discloses a multifunction bit, comprising a tip for realizing a hole on a workpiece, such as a plate and the like, having a surface, at least one radial cutting blade, arranged for realizing a concentric milling to said hole on said surface of said workpiece, and at least one centering cutting blade, arranged to realize a circular milling on the edge of said hole realized by said tip, wherein said multifunction bit comprises a pair of radial cutting blades, and said at least one radial cutting blade is arranged in a more advanced position than said centering cutting blade, with respect to the surface of said workpiece, so that said at least one radial cutting blade realizes a milling deeper than said at least one centering cutting blade. Prior art US 2002/141840 A1 discloses a multifunction bit, comprising a tip for realizing a hole on a workpiece, such as a plate and the like, having a surface, at least one radial cutting blade, arranged for realizing a concentric milling to said hole on said surface of said workpiece, and at least one centering cutting blade, arranged to realize a circular milling on the edge of said hole realized by said tip, wherein said multifunction bit comprises a pair of radial cutting blades, and said at least one radial cutting blade is arranged in a more advanced position than said centering cutting blade, with respect to the surface of said workpiece, so that said at least one radial cutting blade realizes a milling deeper than said at least one centering cutting blade.

It is clear that this procedure is burdensome in economic as well as industrial terms.

In light of the above, it is therefore an object of the present invention proposing a multi-function bit, which allows different machining operations to be carried out without necessarily moving and repositioning several times the machining tools.

It is also an object of the present invention providing necessary machinings for the coupling housings of a tube to a plate in a fast manner with respect to the systems of the prior art and with high precision.

The multifunction bit according to the present invention is described in appended claim 1.

Always according to the invention, said multifunction bit comprises a pair of radial milling inserts, arranged so as to achieve two millings concentric to said hole, partially overlapped, so as to form a circular groove.

Still according to the invention, said multifunction bit may comprise a pair of centering milling inserts, arranged for making a milling on the edge of said hole realized by said milling insert for drilling.

Advantageously according to the invention, said multifunction bit may comprise a body, having a base portion, which said bit is fixed to, and a connection, fixed to said base portion, for the application of a torque, said base portion having at least one lower housing, placed in correspondence of the coupling point between said base portion and said bit, in said at least one lower housing being arranged said centering milling insert fixed to said base by a screw.

Further according to the invention, said multifunction bit may comprise a pair of lower housings, arranged diametrically opposite with respect to said base portion, in which, respectively, a centering milling insert, fixed by means of a respective screw, are arranged.

Preferably according to the invention, said multifunction bit may comprise a least one side housing, arranged on the side surface of said base portion, and at least one support inserted in said side housing, fixed to said base support by a respective screw, said support comprising a clamp, provided with a clamping screw, in which a radial milling insert is inserted.

Always according to the invention, said multifunction bit may have a pair of side housings, arranged on the side surface of said base portion, arranged diametrically opposite with respect to said base, and a pair of supports inserted in a respective side housing, each one fixed to said support base by means of a respective screw, each one of said support comprising a clamp, having a respective clamping screw, in each one of which a respective radial milling insert is inserted.

Still according to the invention, said body may be made in one piece.

Further according to the invention, said at least one radial milling insert is arranged in a more advanced position than said centering milling insert, with respect to the surface of said workpiece, so that said at least one milling radial milling insert realizes a milling deeper than said at least one centering milling insert.

Advantageously according to the invention, said at least one milling insert for drilling and/or said at least one radial milling insert and/or said at least one centering milling insert may be made of a coated hard metal and in particular super high speed steel (HSS - High Speed steel).

The present invention will be now described, for illustrative but not limitative purposes, according to its preferred embodiments, with particular reference to the figures of the enclosed drawings, wherein:
figure 1 shows an exploded view of a multifunction bit according to the present invention;
figure 2 shows a first perspective view of the multifunction bit according to figure 1;
figure 3 shows a second perspective view of the multi-function bit according to figure 1;
figure 4 shows a first side view of the multifunction bit according to figure 1;
figure 5 shows a second side view of the multifunction bit according to figure 1;
figure 6 shows a third side view of the multifunction bit according to figure 1;
figure 7 shows a front view of the multi-function bit according to figure 1;
figure 8 shows a multi-function bit while drilling a plate; and
figure 9 shows a detail of figure 8.

In the various figures, similar parts will be indicated by the same reference numbers.

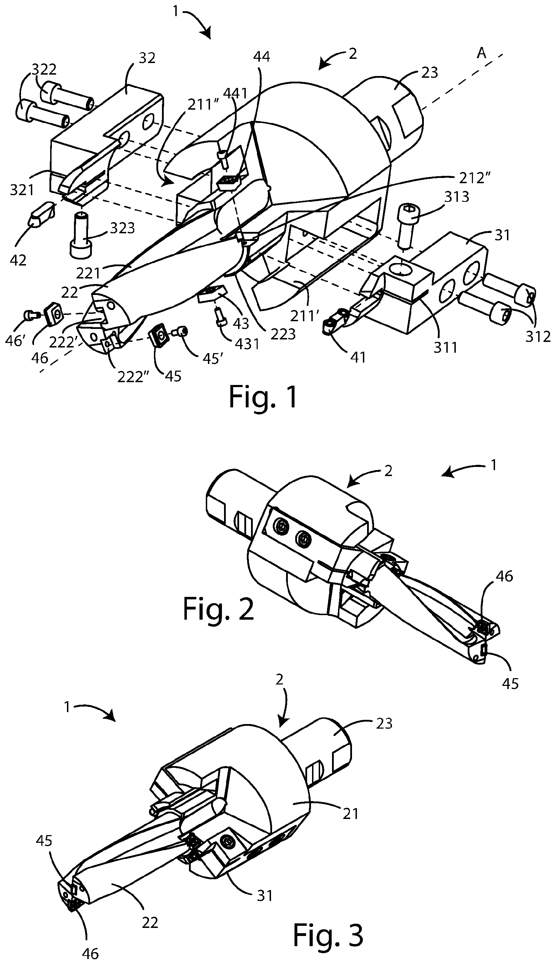

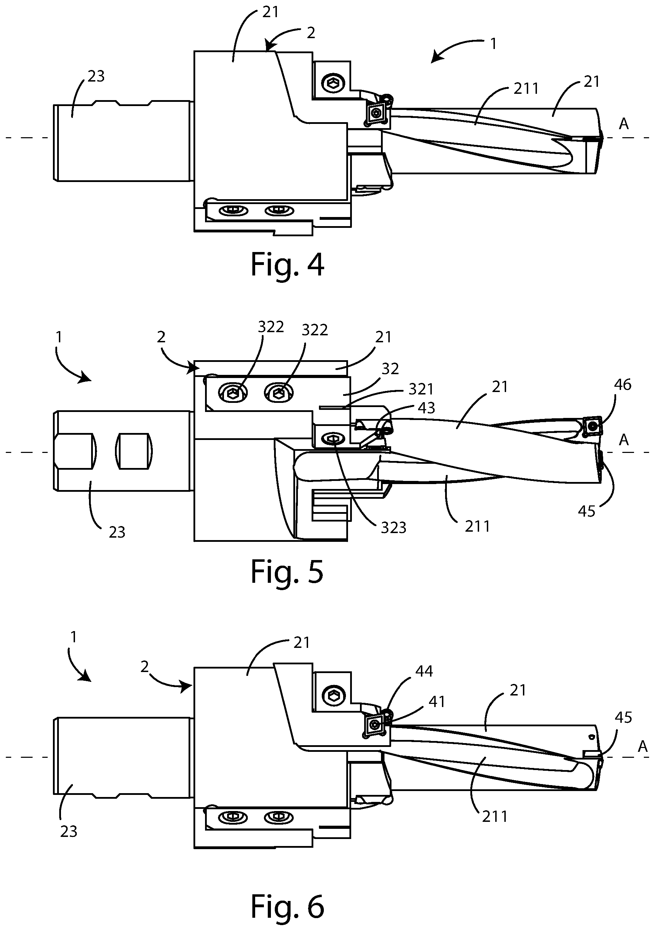

With reference to figures 1-7, a multi-function bit 1 according to the present invention can be observed.

The multi-function bit 1 generally comprises a body 2 having its own axis of symmetry A around which it rotates when it is operating, comprising, in a single piece, a base portion 21, a bit 22 and a connection 23.

Said base portion 21 has a substantially cylindrical shape and has a pair of lateral housings 211' and 211", arranged on the lateral surface of said base portion 21 and diametrically opposite to said axis of symmetry A, and a pair of lower housings 212' and 212", arranged diametrically opposite to said symmetrical axis A, the latter arranged at the coupling point between said base portion 21 and said bit 22. The function of said lateral housings 211', 211" and said lower housings 212', 212" will be better defined below.

The bit 22 has helical grooves 221 and it is designed to be inserted in the hole to be made, for example on a plate or flange to be machined.

Said bit 22 has a first free end, in which two housings 222' and 222" are obtained, a second end, fixed to said support base 21.

Finally, the connection 23 is intended for the application of a torque.

Said multi-function bit 1 also comprises two supports 31 and 32, respectively inserted in said lateral housings 211' and 211", fixed to said support base 21 by means of cylindrical head screws 312 and 322. Said supports 31 and 32 comprise two terminals, respectively indicated with the numerical references 311 and 321, having a respective cylindrical-head locking screw, respectively indicated by the numerical references 313 and 323.

In said terminals 311 and 321 a first insert for radial milling 41 and a second insert for radial milling 42 are fixed.

Said first 41 and second 42 inserts for radial milling are arranged at a distance slightly different from said axis of symmetry A of the multifunction bit 1, or of the body 2, for reasons, which will be better explained below.

The multi-purpose bit 1 according to the invention also comprises a pair of centering inserts 43 and 44, fixed by respective cylindrical head screws 431 and 441.

Each of said centering inserts 43 and 44 is arranged in a respective housing of said second pair of lower housings 212' and 212".

The radial milling inserts 41 and 42 are arranged in a more advanced position than said centering inserts 43 and 44 with respect to the surface S of said plate P to be machined, so that said radial milling inserts 41 and 42 realize a milling operation deeper than said centering inserts 43 and 44.

The multi-function bit 1 also includes a further pair of milling inserts for drilling 45 and 46, each arranged in a respective housing 222' and 222" and secured by respective cylindrical head screws 45' and 46'.

Said first 41 and second 42 radial milling inserts, said pair of centering inserts 43 and 44 and said pair of milling inserts for drilling 45 and 46 in the present embodiment are preferably made of coated hard metal and specifically high speed steel (HSS - High Speed Steel).

The operation of the multi-purpose bit 1 described above is as follows.

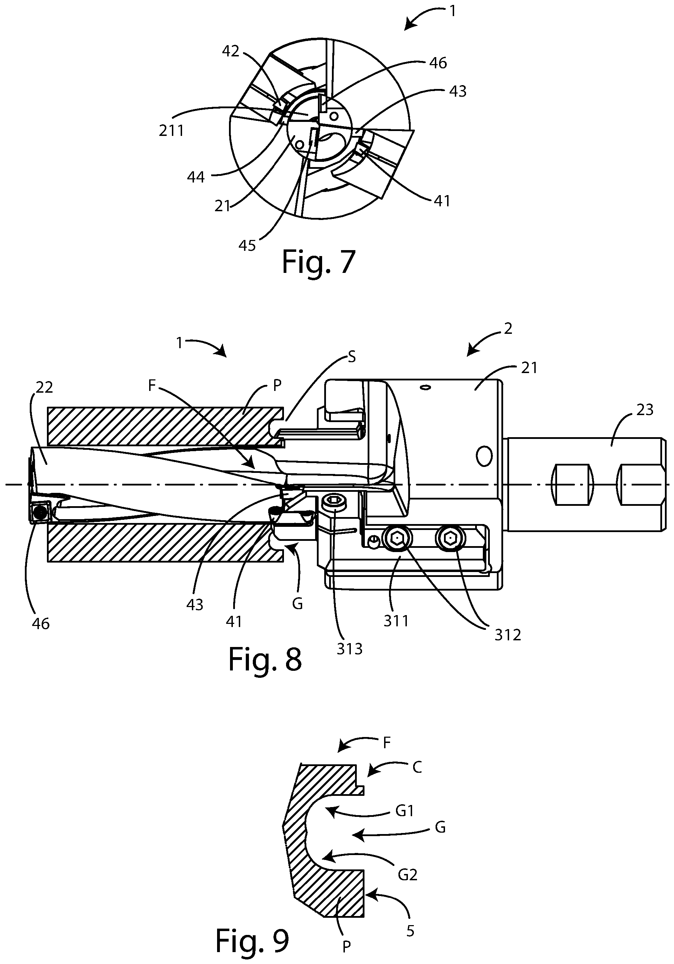

With reference to the figures 8 and 9, when said multi-function bit 1 is activated for drilling a tube plate P, it is put into rotation by a power take-off applied to the connection 23, the pair of milling inserts for drilling 45 and 46 to remove material from the plate P, which is evacuated from the helical grooves 221.

Once the bit 22 has penetrated sufficiently the plate P, forming the hole F, the first radial milling insert 41 and the second radial milling insert 42 simultaneously reach the outer surface S of the plate P, so that each one makes a circular groove. The circular grooves G1 and G2 are mutually concentric and partially overlapped, so as to form a concentric circular groove G with the hole F formed by said bit 22, having an irregular cross-section.

This groove G is designed to allow the anchoring or fixing of any test equipment in the welding zone between the tube and the plate P in correspondence of the hole F.

When the multi-purpose bit still proceeds with the penetration into the sheet P, also the pair of centering inserts 43 and 44 reaches the surface S of the sheet P, making a milling (counterbore) C, on the edge of the hole F, intended to allow the placement of a tube, with a corresponding diameter, to keep it in position and allow the welding process from the inside of the tube - Internal Bore Welding.

An advantage of the present invention is that of allowing the positioning of a single device, which performs various processes, allowing a high time saving in the execution of the machining operations.

It is also an advantage of the present invention to perform four machining operations in a single operating phase.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Multifunction bit (1), comprising
a tip (22) for realizing a hole (F) on a workpiece, such as a plate (P) and the like, having a surface (S),
wherein the multifunction bit comprises at least one radial milling insert (41, 42), arranged for realizing a concentric milling to said hole (F) on said surface (S) of said workpiece, and
at least one centering milling insert (43, 44), arranged to realize a circular milling on the edge of said hole (F) realized by said milling insert for drilling (45, 46),
wherein said at least one radial milling insert (41, 42) is arranged in a more advanced position than said centering milling insert (43, 44), with respect to the surface (S) of said workpiece, so that said at least one milling radial milling insert (41, 42) realizes a milling deeper than said at least one centering milling insert (43, 44)
wherein the multifunction bit comprises at least one milling insert for drilling (45, 46) arranged on the top of said bit (22), the multifunction bit further comprises a pair of radial milling inserts (41, 42), arranged so as to achieve two millings (G1, G2) concentric to said hole (F), partially overlapped, so as to form a circular groove (G), having an irregular cross-section.

2. Multifunction bit (1) according to the preceding claim, **characterized in that** it comprises a pair of centering milling inserts (43, 44), arranged for making a milling on the edge of said hole (F) realized by said milling insert for drilling (45, 46).

3. Multifunction bit (1) according to any one of the preceding claims, **characterized**
**in that** it comprises a body (2), having a base portion (21), which said tip (22) is fixed to, and a connection (23), fixed to said base portion (21), for the application of a torque,
said base portion (21) having at least one lower housing (212', 212"), placed in correspondence of the coupling point between said base portion (21) and said tip (22), in said at least one lower housing (212', 212") being arranged said centering milling insert (43, 44) fixed to said base (21) by a screw (431, 441).

4. Multifunction bit (1) according to the preceding claim, **characterized in that** it comprises a pair of lower housings (212', 212"), arranged diametrically opposite with respect to said base portion (21), in which, respectively, a centering milling insert (43, 44), fixed by means of a respective screw (431, 441), are arranged.

5. Multifunction bit (1) according to any one of claims 3 or 4, **characterized**
**in that** it comprises a least one side housing (211', 211"), arranged on the side surface of said base portion (21), and
**in that** it comprises at least one support (31, 32) inserted in said side housing (211', 211"), fixed to said base support (21) by a respective screw (312, 322), said support (31, 32) comprising a clamp (311, 321), provided with a clamping screw (313, 323), in which a radial milling insert (41, 42) is inserted.

6. Multifunction bit (1) according to the preceding claim, **characterized**
**in that** it comprises a pair of side housings (211', 211"), arranged on the side surface of said base portion (21), arranged diametrically opposite with respect to said base (21), and
**in that** it comprises a pair of supports (31, 32) inserted in a respective side housing (211', 211"), each one fixed to said support base (21) by means of a respective screw (312, 322), each one of said support (31, 32) comprising a clamp (311, 321 ), having a respective clamping screw (313, 323), in each one of which a respective radial milling insert (41, 42) is inserted.

7. Multifunction bit (1) according to any one of claims 3 - 6, **characterized in that** said body (2) is made in one piece.

8. Multifunction bit (1) according to any one of the preceding claims, **characterized in that** said at least one milling insert for drilling (45, 46) and/or said at least one radial milling insert (41, 42) and/or said at least one centering milling insert (43, 44) are made of a coated hard metal and in particular super high speed steel (HSS - High Speed steel).

## Patentansprüche

1. Multifunktions-Bit (1), umfassend eine Spitze (22) zum Realisieren eines Lochs (F) in einem Werkstück, wie beispielsweise einer Platte (P) und dergleichen, die eine Oberfläche (S) aufweist,
wobei das Multifunktions-Bit mindestens einen Radialfräseinsatz (41, 42) umfasst, der angeordnet ist, um ein konzentrisches Fräsen zu dem Loch (F) auf der Oberfläche (S) des Werkstücks zu realisieren, und mindestens einen Zentrierfräseinsatz (43, 44), der angeordnet ist, um ein kreisförmiges Fräsen an dem Rand des Lochs (F) zu realisieren, das durch den Bohreinsatz (45, 46) realisiert wurde,
wobei der mindestens eine Radialfräseinsatz (41, 42) in einer vorgerückteren Position als der Zentrierfräseinsatz (43, 44) in Bezug auf die Oberfläche (S) des Werkstücks angeordnet ist, sodass der mindestens eine Radialfräseinsatz (41, 42) ein tieferes Fräsen als der mindestens eine Zentrierfräseinsatz (43, 44) realisiert,
wobei das Multifunktions-Bit mindestens einen Fräseinsatz zum Bohren (45, 46) umfasst, der an der Oberseite des Bits (22) angeordnet ist, wobei das Multifunktions-Bit ferner ein Paar von Radialfräseinsätzen (41, 42) umfasst, die angeordnet sind, um zwei Fräsungen (G1, G2) konzentrisch zu dem Loch (F) zu erreichen, die sich teilweise überlappen, um eine kreisförmige Nut (G) zu bilden, die einen unregelmäßigen Querschnitt bildet.

2. Multifunktions-Bit (1) nach dem vorherigen Anspruch, **dadurch gekennzeichnet, dass** es ein Paar Zentrierfräseinsätze (43, 44) umfasst, die angeordnet sind, um eine Fräsung an dem Rand des Lochs (F) anzufertigen, der durch den Fräseinsatz zum Bohren (45, 46) realisiert wird.

3. Multifunktions-Bit (1) nach einem der vorherigen Ansprüche,
**dadurch gekennzeichnet, dass** es einen Körper (2) umfasst, der einen Basisabschnitt (21) aufweist, an dem die Spitze (22) befestigt ist, und eine an dem Basisabschnitt (21) befestigte Verbindung (23) zum Anwenden eines Drehmoments,
wobei der Basisabschnitt (21) mindestens ein unteres Gehäuse (212, 212") aufweist, das in Übereinstimmung mit dem Verbindungspunkt zwischen dem Basisabschnitt (21) und der Spitze (22) angeordnet ist, wobei in dem mindestens einen unteren Gehäuse (212', 212") der Zentrierfräseinsatz (43, 44) angeordnet ist, der an der Basis (21) durch eine Schraube (431, 441) befestigt ist.

4. Multifunktions-Bit (1) nach dem vorherigen Anspruch, **dadurch gekennzeichnet, dass** es ein Paar untere Gehäuse (212', 212") umfasst, die in Bezug auf den Basisabschnitt (21) diametral gegenüberliegend angeordnet sind und in denen jeweils ein Zentrierfräseinsatz (43, 44) angeordnet ist, der mittels einer entsprechenden Schraube (431, 441) befestigt ist.

5. Multifunktions-Bit (1) nach einem der Ansprüche 3 oder 4, **dadurch gekennzeichnet**
**dass** es mindestens ein seitliches Gehäuse (211', 211") aufweist, das an der Seitenfläche des Basisabschnitts (21) angeordnet ist, und
**dass** es mindestens eine Halterung (31, 32) umfasst, die in das Seitengehäuse (211', 211") eingesetzt ist, das an der Basishalterung (21) durch eine jeweilige Schraube (312, 322) befestigt ist, die Halterung (31, 32) umfassend eine Klemme (311, 321), die mit einer Klemmschraube (313, 323) versehen ist, in die ein Radialfräseinsatz (41, 42) eingesetzt ist.

6. Multifunktions-Bit (1) nach dem vorherigen Anspruch, **dadurch gekennzeichnet**
**dass** es ein Paar Seitengehäuse (211 ', 211 ") umfasst, die an der Seitenfläche des Basisabschnitts (21) angeordnet sind, die in Bezug auf die Basis (21) diametral gegenüberliegend angeordnet sind, und
**dass** es ein Paar von Halterungen (31, 32) umfasst, die in ein jeweiliges Seitengehäuse (211', 211") eingesetzt sind, wobei jede an der Halterungsbasis (21) mittels einer jeweiligen Schraube (312, 322) befestigt ist, jede der Halterungen (31, 32) umfassend eine Klemme (311, 321), die eine jeweilige Klemmschraube (313, 323) aufweist, in die jeweils ein jeweiliger Radialfräseinsatz (41, 42) eingesetzt ist.

7. Multifunktions-Bit (1) nach einem der Ansprüche 3 bis 6, **dadurch gekennzeichnet, dass** der Körper (2) aus einem Stück gefertigt ist.

8. Multifunktions-Bit (1) nach einem der vorherigen Ansprüche, **dadurch gekennzeichnet, dass** der mindestens eine Fräseinsatz zum Bohren (45, 46) und/oder der mindestens eine Radialfräseinsatz (41, 42) und/oder der mindestens eine Zentrierfräseinsatz (43, 44) aus einem beschichteten Hartmetall und insbesondere aus Superschnellstahl (HSS - High Speed steel) gefertigt sind.

## Revendications

1. Embout multifonction (1), comprenant
une pointe (22) pour réaliser un trou (F) sur une pièce, telle qu'une plaque (P) et similaire, présentant une surface (S),
dans lequel l'embout multifonction comprend au moins un insert de fraisage radial (41, 42), agencé pour réaliser un fraisage concentrique audit trou (F) sur ladite surface (S) de ladite pièce, et
au moins un insert de fraisage de centrage (43, 44), agencé pour réaliser un fraisage circulaire sur le bord dudit trou (F) réalisé par ledit insert de fraisage pour le perçage (45, 46),
dans lequel ledit au moins un insert de fraisage radial (41, 42) est agencé dans une position plus avancée que ledit insert de fraisage de centrage (43, 44), par rapport à la surface (S) de ladite pièce, de sorte que ledit au moins un insert de fraisage radial (41, 42) réalise un fraisage plus profond que ledit au moins un insert de fraisage de centrage (43, 44)
dans lequel l'embout multifonction comprend au moins un insert de fraisage pour le perçage (45, 46) agencé sur le dessus dudit embout (22), l'embout multifonction comprend en outre une paire d'inserts de fraisage radial (41, 42), agencés de manière à obtenir deux fraisages (G1, G2) concentriques audit trou (F), partiellement superposés, de manière à former une rainure circulaire (G), présentant une section transversale irrégulière.

2. Embout multifonction (1) selon la revendication précédente, **caractérisé en ce qu'**il comprend une paire d'inserts de fraisage de centrage (43, 44), agencés pour effectuer un fraisage sur le bord dudit trou (F) réalisé par ledit insert de fraisage pour le perçage (45, 46).

3. Embout multifonction (1) selon l'une quelconque des revendications précédentes,
**caractérisé en ce qu'**il comprend un corps (2), présentant une partie de base (21), à laquelle ladite pointe (22) est fixée, et une connexion (23), fixée à ladite partie de base (21), pour l'application d'un couple,
ladite partie de base (21) présentant au moins un boîtier inférieur (212, 212"), placé en correspondance du point de couplage entre ladite partie de base (21) et ladite pointe (22), dans ledit au moins un boîtier inférieur (212', 212") étant agencé **en ce que** ledit insert de fraisage de centrage (43, 44) est fixé à ladite base (21) par une vis (431, 441).

4. Embout multifonction (1) selon la revendication précédente, **caractérisé en ce qu'**il comprend une paire de boîtiers inférieurs (212', 212"), agencés diamétralement opposés par rapport à ladite partie de base (21), dans lesquels, respectivement, un insert de fraisage de centrage (43, 44), fixé au moyen d'une vis respective (431, 441), est agencé.

5. Embout multifonction (1) selon l'une quelconque des revendications 3 ou 4,
**caractérisé en ce qu'**il comprend au moins un boîtier latéral (211', 211"), agencé sur la surface latérale de ladite partie de base (21), et
**en ce qu'**il comprend au moins un support (31, 32) inséré dans ledit boîtier latéral (211', 211"), fixé audit support de base (21) par une vis respective (312, 322), ledit support (31, 32) comprenant un collier de serrage (311, 321), muni d'une vis de serrage (313, 323), dans laquelle un insert de fraisage radial (41, 42) est inséré.

6. Embout multifonction (1) selon la revendication précédente,
**caractérisé en ce qu'**il comprend une paire de boîtiers latéraux (211', 211"), agencés sur la surface latérale de ladite partie de base (21), agencés diamétralement opposés par rapport à ladite base (21), et
**en ce qu'**il comprend une paire de supports (31, 32) insérés dans un boîtier latéral respectif (211', 211"), chacun fixé à ladite base de support (21) au moyen d'une vis respective (312, 322), chacun desdits supports (31, 32) comprenant un collier de serrage (311, 321), présentant une vis de serrage respective (313, 323), dans chacune desquelles un insert de fraisage radial respectif (41, 42) est inséré.

7. Embout multifonction (1) selon l'une quelconque des revendications 3-6, **caractérisé en ce que** ledit corps (2) est réalisé en une seule pièce.

8. Embout multifonction (1) selon l'une quelconque des revendications précédentes, **caractérisé en ce que** ledit au moins un insert de fraisage pour le perçage (45, 46) et/ou ledit au moins un insert de fraisage radial (41, 42) et/ou ledit au moins un insert de fraisage de centrage (43, 44) sont réalisés en un métal dur revêtu et en particulier en acier super rapide (HSS - High Speed steel) .
